# FASCICULE DE BREVET EUROPEEN

(11) **EP 2 630 705 B1**
(45) Date de publication et mention de la délivrance du brevet: **02.08.2017**
(21) Numéro de dépôt: 11779599.7
(22) Date de dépôt: 18.10.2011
(51) Int. Cl.: H01S 3/06, G02F 1/365, G01J 3/10, G01J 3/44, G01J 11/00, H01S 3/067, G02F 1/35, G01J 3/02

(54) **METHODE ET DISPOSITIF D'EMISSION LASER POUR L'ANALYSE SPECTROSCOPIQUE D'UN ECHANTILLON**
LASEREMISSIONSVORRICHTUNG UND VERFAHREN ZUR SPEKTROSKOPISCHEN ANALYSE EINER PROBE
LASER EMISSION DEVICE AND METHOD FOR THE SPECTROSCOPIC ANALYSIS OF A SAMPLE

(30) Priorité: 18.10.2010 FR 1058472
(43) Date de publication de la demande: 28.08.2013
(73) Titulaire: Centre National de la Recherche Scientifique (C.N.R.S.), 75794 Paris Cedex 16 (FR)
(72) Inventeur: COUDERC, Vincent, F-87430 Verneuil-sur-Vienne (FR); LEPROUX, Philippe, F-87000 Limoges (FR); HUSS, Guillaume, F-87000 Limoges (FR); DE ANGELIS, Annalisa, I-00010 Villa Adriana (Rome) (IT)
(74) Mandataire: Osha Liang
(86) Numéro de dépôt international: PCT/EP2011/068200
(87) Numéro de publication internationale: WO 2012/052447

(56) Documents cités:
- WO-A1-2010/007630
- US-A1- 2009 073 432
- US-A1- 2010 110 426
- US-A1- 2010 208 252
- OKUNO M ET AL: "ULTRABROADBAND (>2000 CM-1) MULTIPLEX COHERENT ANTI-STOKES RAMAN SCATTERING SPECTROSCOPY USING A SUBNANOSECOND SUPERCONTINUUM LIGHT SOURCE", OPTICS LETTERS, OSA, OPTICAL SOCIETY OF AMERICA, WASHINGTON, DC, US, vol. 32, no. 20, 15 octobre 2007 (2007-10-15), pages 3050-3052, XP001508570, ISSN: 0146-9592, DOI: DOI:10.1364/OL.32.003050 cité dans la demande

## Description

### ETAT DE L'ART

### Domaine technique de l'invention

La présente invention concerne une méthode et un dispositif d'émission laser pour l'analyse spectroscopique d'un échantillon, notamment dans des applications d'imagerie non linéaire.

### Etat de l'art

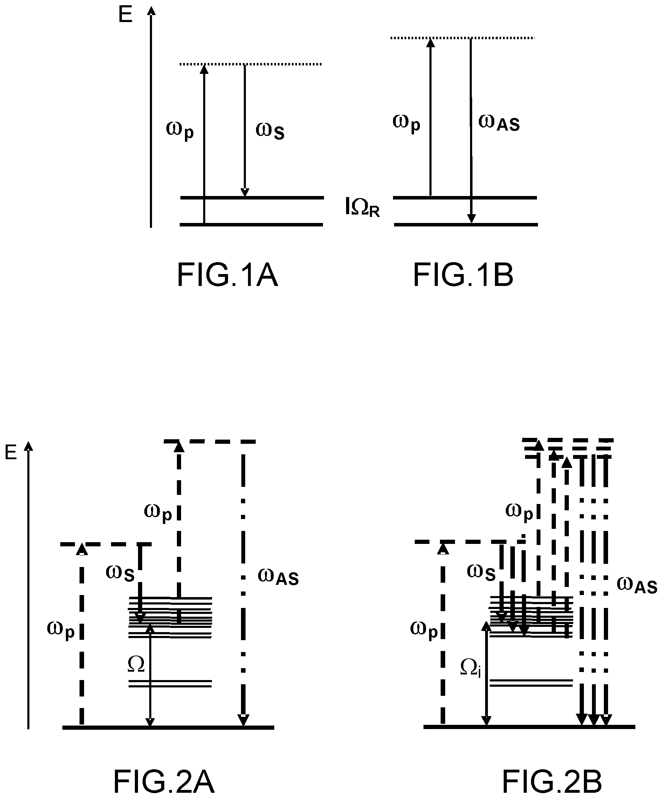

Toutes les liaisons chimiques possèdent des fréquences de vibration qui leur sont propres. On appelle techniques optiques vibrationnelles des méthodes qui visent à utiliser l'interaction lumière/matière pour obtenir des informations sur ces vibrations moléculaires. La plus connue de ces techniques est la spectroscopie infrarouge (IR) qui observe les raies d'absorption spécifiques des liaisons chimiques présentes dans un échantillon. Découverte en 1928, la diffusion Raman (du nom du physicien Chandrasekhara Venkata Raman qui découvrit l'effet) permet d'utiliser la lumière visible pour accéder au spectre vibrationnel des molécules qui interagissent avec un faisceau lumineux. Dans un processus de diffusion Raman, une onde pompe de pulsation ω_{P} incidente sur une molécule est diffusée inélastiquement en une onde dite Stokes de pulsation ω_{S} (Figure 1A) et une onde dite anti-Stokes de pulsation ω_{AS} (Figure 1B). L'écart en fréquence entre les ondes générées et l'onde pompe dépend de la transition Raman moléculaire (de pulsation Ω_{R}) de telle sorte que ωₚ-ωₛ = ωₐₛ-ωₚ = Ω_{R}. Dans une vision photonique du processus, les ondes Stokes et anti-Stokes correspondent à une absorption à partir respectivement du niveau vibrationnel fondamental ou excité. Dans les milieux denses en équilibre thermodynamique, le processus générant l'onde anti-Stokes, partant du niveau vibrationnel excité (B), est beaucoup moins probable que le processus créant l'onde Stokes, qui est la seule observée dans la pratique en spectroscopie Raman spontanée. Une étude fine de la répartition spectrale des ondes Stokes renseigne sur les densités de liaisons chimiques présentes dans l'échantillon. Ce processus spontané de diffusion inélastique est très peu efficace comparé à la fluorescence (les sections efficaces Raman sont de l'ordre de 10⁻³⁰ cm² /molécule, à comparer avec la section efficace d'absorption à 1 photon d'un fluorophore qui atteint 10⁻¹⁶ cm² /molécule).

La spectroscopie Raman stimulée CARS (pour Coherent Anti-Stokes Raman Scattering) est un processus de mélange à quatre ondes qui permet de cibler les liaisons vibrationnelles présentes dans un échantillon. Ce processus est par exemple décrit dans R.W. Boyd, Nonlinear Optics (Academic Press, Boston, 1992). Il s'agit d'envoyer deux impulsions lasers de pulsations ωₚ et ωₛ (ou fréquences νₚ et νₛ dont la différence de pulsations est rendue égale à la pulsation Ω du niveau vibrationnel que l'on veut adresser. Dans cette configuration de résonance ωₚ-ωₛ = Ω, le niveau vibrationnel de pulsation Ω est peuplé de manière stimulée et va pouvoir diffuser inélastiquement le faisceau de pulsation ωₚ dans un faisceau de pulsation ωₐₛ = 2 ωₚ-ωₛ (Figure 2A). La présence de cette nouvelle radiation ωₐₛ est la signature de la présence de la liaison vibrant à la pulsation Ω dans l'échantillon. Une première mise en oeuvre de CARS consiste à envoyer sur l'échantillon deux impulsions picoseconde fines spectralement dont la différence de pulsations n'adressera qu'une liaison vibrationnelle spécifique. Pour une identification optimale, on recherche l'ensemble des liaisons vibrationnelles présentes dans l'échantillon. Pour cela, on opère en mode dit « Multiplex CARS » (voir par exemple M.Muller et J. Schins, « Imaging the thermodynamic state of lipidic membranes with multiplex CARS spectroscopy », Physical Chemistry B 106, 3715-3723 (2002)) où l'on envoie sur l'échantillon une impulsion ωₚ fine spectralement et une impulsion ωₛ large spectralement (Figure 2B). On peut ainsi adresser l'ensemble des niveaux vibrationnels Ωᵢ présents dans l'échantillon et obtenir un spectre du signal ωₐₛ généré, permettant des applications de type microspectroscopie.

Un dispositif pour la mise en oeuvre de microspectroscopie CARS est par exemple décrit dans H. Kano et al. (« Vibrationally resonant imaging of a single living cell by supercontinuum-based multiplex coherent anti-Stokes Raman scattering microspectroscopy », Optics Express Vol.13, N°4, 1322 (2005)). Dans le dispositif décrit, l'impulsion large spectralement est obtenue par génération d'une source dite «supercontinuum » (SC) au moyen d'une fibre à cristal photonique ou PCF (selon l'abréviation de l'expression anglo-saxonne « Photonic Crystal Fiber ») dans laquelle est injectée une impulsion femtoseconde, ici une impulsion de 100 femtosecondes émise par un oscillateur laser Ti : Saphire. Un dispositif semblable est décrit dans le brevet américain US 7,092,086. Cependant dans ces exemples, l'utilisation d'un faisceau de pompe femtoseconde limite la résolution spectrale dans l'analyse de l'émission CARS.

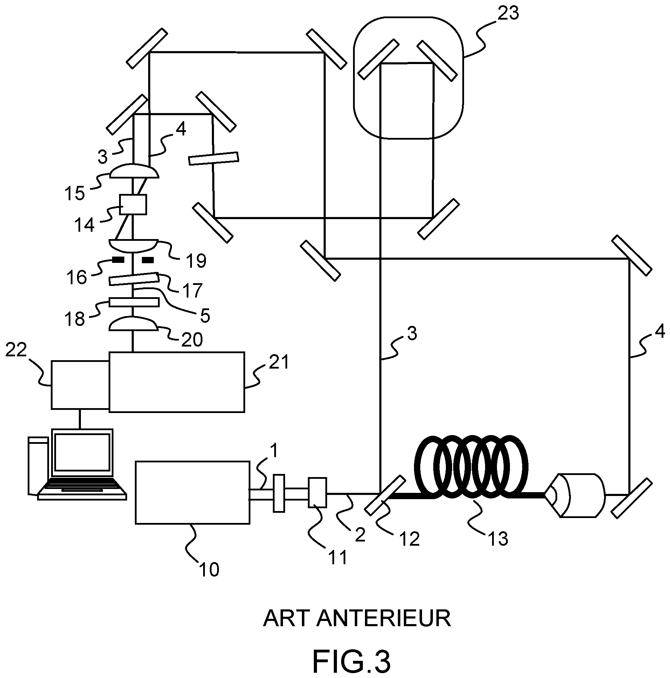

Un autre dispositif pour la mise en oeuvre de microspectroscopie CARS est décrit dans M. Okuno et al. (« Ultrabroadband (>2000cm-1) multiplex coherent anti-Stokes Raman Scattering spectroscopy using a subnanosecond supercontinuum light source », Optics Letters, Vol.32, N°20 (2007)). Cet article décrit un dispositif dont un schéma est reproduit sur la figure 3. L'onde 1 émise par un microlaser 10 déclenché à 1,064 µm est envoyée dans un cristal non linaire doubleur 11 pour former une onde 2 à 532 nm, seconde harmonique de l'onde incidente 1. L'onde 2 est divisée en deux faisceaux au moyen d'une lame séparatrice 12. Environ 10% de l'énergie est utilisée pour former le faisceau pompe 3 dans le processus CARS et 90% est injectée dans une fibre à cristal photonique 13 pour générer le supercontinuum qui formera le faisceau Stokes 4 dans le processus CARS. Les deux faisceaux sont focalisés dans l'échantillon 14 au moyen d'une même lentille 15. Une ligne à retard 23 sur le chemin optique du faisceau pompe 3 permet de synchroniser la focalisation des faisceaux pompe et Stokes dans l'échantillon. Un diaphragme 16 est introduit pour bloquer les faisceaux pompe et Stokes en aval de l'échantillon et supprimer l'émission de fluorescence issue de l'échantillon. Une combinaison de filtres à réjection de longueur d'onde et passe bande (respectivement 17, 18) en aval de l'échantillon est utilisée pour rejeter les faisceaux pompe et stokes. Le faisceau émis CARS (référence 5) est collimaté au moyen d'un objectif 19 et focalisé (lentille 20) sur la fente d'entrée d'un spectrographe 21 puis détecté au moyen d'un détecteur matriciel 22, par exemple une caméra CCD. Par opposition aux sources lasers impulsionnelles dites picosecondes ou femtosecondes, la durée d'impulsion des sources laser dites nanosecondes ou subnanosecondes est typiquement comprise entre quelques fractions de nanosecondes (quelques centaines de picosecondes) et quelques dizaines de nanosecondes. Dans ce dispositif, l'utilisation d'un microlaser déclenché à 1,064 µm émettant des impulsions nanosecondes présente de nombreux avantages. Les microlasers sont en effet des sources de faible coût avec des fréquences de récurrence de quelques Hz à plus de 100 KHz et des puissances crêtes supérieures à 20 KW. Comme expliqué précédemment, ces impulsions servent de faisceau pompe pour la microspectroscopie CARS et sont injectées dans une fibre à cristal photonique pour générer le supercontinuum. Une très bonne résolution (de l'ordre de 3 cm⁻¹) est obtenue grâce à l'utilisation de ces sources subnanosecondes.

Cependant, la déposante a mis en évidence dans le dispositif tel que décrit sur la figure 3, un élargissement temporel non linéaire de l'impulsion supercontinuum générée dans la fibre à cristal photonique, limitant l'efficacité d'interaction entre la pompe et la sonde dans le mécanisme CARS.

Des dispositifs d'émission laser pour l'analyse spectroscopique d'échantillon sont également connus de US2009/0073432 et US2010/0110426.

Un objet de l'invention est de proposer un dispositif d'émission laser adapté à l'analyse spectroscopique d'un échantillon qui permette notamment de s'affranchir des limitations de l'art antérieur.

### RESUME DE L'INVENTION

Selon un premier aspect, l'invention concerne un dispositif d'émission laser pour l'analyse spectroscopique d'un échantillon comprenant :
- une source laser primaire d'émission d'un faisceau pompe et d'un faisceau d'excitation, les deux faisceaux étant impulsionnels, de durée d'impulsion nanoseconde ou subnanoseconde;
- une fibre optique non linéaire dans laquelle est injecté ledit faisceau d'excitation pour former un faisceau sonde à large bande spectrale ;
- un dispositif de contrôle du profil temporel d'un desdits faisceaux pompe ou d'excitation permettant de compenser l'élargissement temporel non linéaire du faisceau sonde généré par la fibre optique non linéaire afin d'obtenir des faisceaux pompe et sonde dont les enveloppes temporelles ont des durées sensiblement égales;
- des moyens de superposition spatiale desdits faisceaux pompe et sonde en vue de l'analyse spectroscopique de l'échantillon.

Avantageusement, la source laser primaire comprend une source d'émission laser nanoseconde ou subnanoseconde et un dispositif de séparation de l'onde émise en deux faisceaux de puissances contrôlées pour former lesdits faisceau pompe et faisceau d'excitation. Par exemple, la source primaire est un microlaser, par exemple le microlaser émet à 1,064 µm.

Selon une première variante, le dispositif de contrôle du profil temporel permet la diminution de la durée d'impulsion du faisceau d'excitation.

Par exemple, le dispositif de contrôle du profil temporel comprend un matériau biréfringent et un polariseur, le faisceau d'excitation étant polarisé en entrée du dispositif de contrôle du profil temporel selon une direction distincte des axes de biréfringence dudit matériau biréfringent. La rotation non linéaire de la polarisation due à des effets non linéaires dans le matériau biréfringent associée à une orientation donnée du polariseur permet de couper les bords de l'impulsion et de réduire ainsi sa durée. Par exemple, le dispositif de contrôle du profil temporel comprend une fibre biréfringente.

Selon un autre exemple, le dispositif de contrôle du profil temporel comprend un matériau à absorption saturable.

Alternativement, le dispositif de contrôle du profil temporel permet l'élargissement de la durée d'impulsion du faisceau pompe.

Selon un exemple, le dispositif de contrôle du profil temporel comprend une fibre optique dispersive.

Avantageusement, le dispositif d'émission laser comprend en outre un amplificateur optique en amont de ladite fibre optique non linéaire permettant de régénérer l'impulsion pour procurer l'élargissement spectral recherché dans la fibre.

Avantageusement, le dispositif d'émission laser comprend en outre une ligne à retard optique pour ajuster les chemins optiques des faisceaux pompe et sonde et permettre la superposition temporelle des faisceaux pompe et sonde dans l'échantillon.

Selon une variante, le dispositif d'émission laser comprend en outre un dispositif optique non linéaire de génération d'harmoniques dans lequel est injecté le faisceau pompe pour générer au moins un second faisceau pompe à une longueur d'onde différente de celle du premier faisceau pompe. Par exemple, le dispositif optique non linéaire est un dispositif doubleur de fréquence. Cela permet par exemple de bénéficier d'un ou deux faisceaux pompe dans l'infrarouge et dans le visible. Avantageusement, un sélecteur spectral peut permettre de travailler avec l'un et/ou l'autre des deux faisceaux pompe.

Selon un deuxième aspect, l'invention concerne un système d'analyse spectroscopique d'un échantillon comprenant un dispositif d'émission laser selon le premier aspect et un analyseur spectral et/ou temporel de l'onde résultant de l'interaction non linéaire dans l'échantillon des faisceaux pompe et sonde émis par ledit dispositif d'émission laser.

Selon un troisième aspect, l'invention concerne une méthode d'émission laser pour l'analyse spectroscopique d'un échantillon comprenant :
- l'émission d'un faisceau pompe et d'un faisceau d'excitation, les deux faisceaux étant impulsionnels, de durée d'impulsion nanoseconde ou subnanoseconde;
- l'injection dans une fibre optique non linéaire dans dudit faisceau d'excitation pour former un faisceau sonde à large bande spectrale ;
- le contrôle du profil temporel d'un desdits faisceaux pompe ou d'excitation permettant de compenser l'élargissement temporel non linéaire du faisceau sonde généré par la fibre optique non linéaire afin d'obtenir des faisceaux pompe et sonde possédant des durées de leurs enveloppes temporelles sensiblement égales;
- la superposition spatiale desdits faisceaux pompe et sonde en vue de l'analyse spectroscopique de l'échantillon.

Selon une première variante, le contrôle du profil temporel d'un desdits faisceaux pompe ou d'excitation comprend la réduction de la largeur temporelle du faisceau d'excitation.

Selon une seconde variante, le contrôle du profil temporel d'un desdits faisceaux pompe ou d'excitation comprend l'élargissement de la largeur temporelle du faisceau de pompe.

Avantageusement, la méthode d'émission laser comprend en outre l'amplification du faisceau d'excitation avant son injection dans ladite fibre non linéaire.

### BREVE DESCRIPTION DES DESSINS

D'autres avantages et caractéristiques de l'invention apparaîtront à la lecture de la description, illustrée par les figures suivantes :
- Figures 1A et 1B (déjà décrites), principe de l'émission Stokes et anti-Stokes dans un processus de diffusion Raman;
- Figure 2A et 2B (déjà décrites), principe de la diffusion CARS dans deux modes différents ;
- Figure 3, schéma d'un dispositif d'une source d'émission laser selon l'art antérieur (déjà décrite) ;
- Figure 4, schéma illustrant un premier exemple de réalisation d'une source d'émission laser selon l'invention ;
- Figures 5A et 5B, exemple d'une fibre non linéaire pour la mise en oeuvre de l'invention et courbe de dispersion calculée associée à la fibre ;
- Figure 6, courbe expérimentale représentant la densité de puissance en fonction de la longueur d'onde en sortie de la fibre non linéaire dans un exemple de mise en oeuvre du dispositif selon l'invention;
- Figures 7A à 7C, mise en évidence de l'élargissement temporel non linéaire dans une fibre à cristal photonique;
- Figure 8, exemple de réalisation d'un dispositif de contrôle du profil temporel pour la mise en oeuvre du dispositif selon l'invention ;
- Figure 9, schéma illustrant un second exemple de réalisation d'une source d'émission laser selon l'invention ;
- Figure 10, courbe expérimentale représentant la densité de puissance en fonction de la longueur d'onde en sortie de la fibre non linéaire dans un autre exemple de mise en oeuvre du dispositif selon l'invention.

### DESCRIPTION DETAILLEE

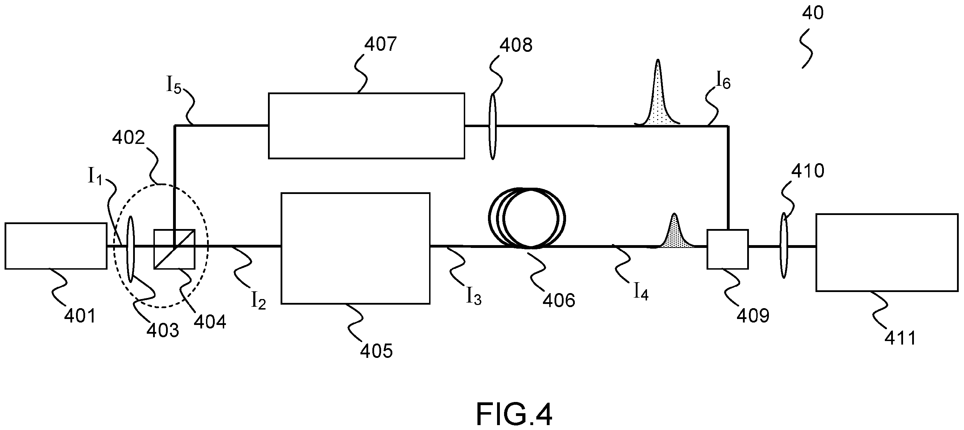

La figure 4 illustre un exemple de réalisation d'un dispositif d'émission laser pour l'analyse spectroscopique d'un échantillon selon l'invention. Le dispositif comprend une source laser primaire 401 émettant des impulsions nanoseconde ou subnanoseconde (I₁), typiquement de durée d'impulsion comprise entre 100 ps et 10 ns, par exemple un laser déclenché ou « Q-switch » selon l'expression anglo-saxonne. Il s'agit avantageusement d'un microlaser, par exemple dopé Néodyme, déclenché de manière passive par un absorbant saturable passif et/ou actif. La longueur d'onde est par exemple centrée à 1,064 µm avec une largeur de raie fine proche de la limite de Fourier (de l'ordre de 800 ps). La cadence de répétition est par exemple comprise entre quelques Hz et 200 kHz, ajustable ou non avec un déclenchement externe. La puissance crête est par exemple comprise entre quelques kW et quelques dizaines de kW. Dans l'exemple de la figure 4, un séparateur de faisceau à puissances contrôlées 402 permet de former à partir des impulsions I₁ émises par la source laser 401 des impulsions I₂ et I₃ dont on peut contrôler les énergies respectives. Par exemple, le séparateur 402 comprend une lame demi onde 403 et un cube séparateur de polarisation 404. La lame demi-onde permet de faire tourner la polarisation de l'onde émise par la source laser primaire polarisée (soit polarisée en sortie de laser, soit au moyen d'un polariseur), et ainsi de contrôler la répartition de l'énergie sur les deux voies à la sortie du cube séparateur de
polarisation. Les impulsions I₂ et I₅ sont respectivement envoyées vers une voie dite d'excitation et une voie dite de pompe. Le contrôle de la puissance sur chaque voie permet par exemple d'optimiser en temps réel le signal CARS provenant de l'échantillon et de l'adapter à chaque échantillon étudié. Dans l'exemple de la figure 4, une lame demi-onde 408 peut être agencée pour sélectionner la polarisation du faisceau pompe incident sur l'échantillon. La voie d'excitation comprend un dispositif 405 de contrôle du profil temporel des impulsions I₂ suivi par une fibre non linéaire 406 pour la génération d'un supercontinuum. Les impulsions I₄ et I₆ respectivement issues des voies d'excitation et de pompe sont alors superposées spatialement au moyen d'un combineur 409, par exemple un polariseur ou une lame dichroïque, puis envoyées vers un dispositif d'analyse spectroscopique 411, par exemple un microscope muni d'un spectroscope. L'ensemble de la source d'émission laser et du dispositif d'analyse 411 forme ainsi un système complet d'analyse spectroscopique 40. Des filtres 410 peuvent être agencés pour favoriser une gamme de longueurs d'onde particulières permettant d'identifier des composés chimiques spécifiques. Une ligne à retard optique, par exemple basée sur le principe d'une cavité « Herriott » peut être positionnée par exemple sur la voie du faisceau pompe pour contrôler la superposition temporelle des faisceaux pompe et sonde.

La fibre non linéaire 406 permet un élargissement spectral accompagné d'une découpe temporelle transformant le signal subnanoseconde en une succession d'impulsions femtoseconde incohérentes entre elles. Cette transformation est obtenue dans une fibre non linéaire qui est pourvue d'une ou plusieurs longueurs d'onde de dispersion chromatique nulle. Cet élargissement spectral peut être réalisé simultanément dans le visible et dans l'infrarouge, entre 300 nm et 2,2 µm par exemple. On peut utiliser pour ce faire une fibre microstructurée, dopée ou non avec des ions de type germanium, lanthane, phosphore, etc. Cette fibre non linéaire peut également être constituée de divers morceaux de fibres ne présentant pas les mêmes caractéristiques mais permettant de minimiser la différence de temps de groupe entre les longueurs d'onde créées par l'effet non linéaire.

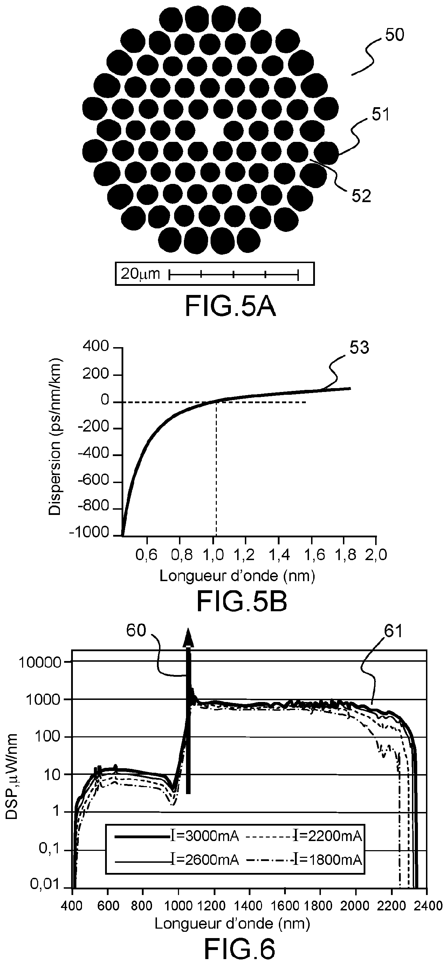

Les figures 5A et 5B illustrent respectivement une image prise au microscope électronique à balayage (MEB) d'un exemple de fibre non linéaire adaptée à la mise en oeuvre du dispositif d'émission laser selon l'invention ainsi que la courbe de dispersion calculée pour cette fibre. La fibre non linéaire 50 représentée sur la figure 5A est une fibre en silice microstructurée, c'est-à-dire présentant dans une structure 52 en silice de forme sensiblement cylindrique des trous d'air 51 de forme sensiblement cylindriques et dont les diamètres sont compris dans cet exemple entre 2.5 et 4µm avec une moyenne de 3 microns environ.

Les techniques de réalisation d'une telle fibre sont connues de l'homme du métier et décrite par exemple dans l'article de P. St. J. Russell, "Photonic crystal fibers," Science 299, 358-362 (2003). La courbe de dispersion de la fibre est calculée au moyen d'un logiciel adapté, par exemple le logiciel « COMSOL Multiphysics Simulation Software » de la société COMSOL. A partir des structures géométriques de la fibre, on peut calculer la dispersion donnée en ps/nm/km en fonction de la longueur d'onde. Il apparaît notamment que la courbe 53 obtenue pour la fibre microstructurée représentée sur la figure 5A présente un zéro de dispersion autour de 1 micron. Au-dessous du zéro de dispersion, la dispersion est négative et elle est dite normale. Au-dessus, la dispersion est positive et elle est dite anormale. La courbe de dispersion chromatique est utilisée pour simuler la propagation d'une onde incidente dans la fibre en tenant compte de l'ensemble des effets non linéaires. Par exemple, le logiciel « FIBER DESK nonlinear pulse propagation » permet de telles simulations (www.fiberdesk.com).

Excitée à 1,064 µm, la fibre non linéaire représentée sur la figure 5A permet de générer un supercontinuum dont un spectre expérimental est représenté sur la figure 6. Le spectre, généralement indexé par la référence 61, montre un étalement des longueurs d'onde générées vers les fortes longueurs d'onde, au-delà de 1,064 µm pour une excitation à 1,064 µm, symbolisée par la flèche 60. Il est obtenu avec une puissance crête d'entrée de 10 kW permettant de générer des effets non linéaires de type : automodulation de phase, effets solitoniques et mélanges paramétriques. Le choix de la fibre microstructurée et de la longueur d'onde d'excitation permet d'ajuster de façon connue le spectre du supercontinuum en fonction de l'application recherchée.

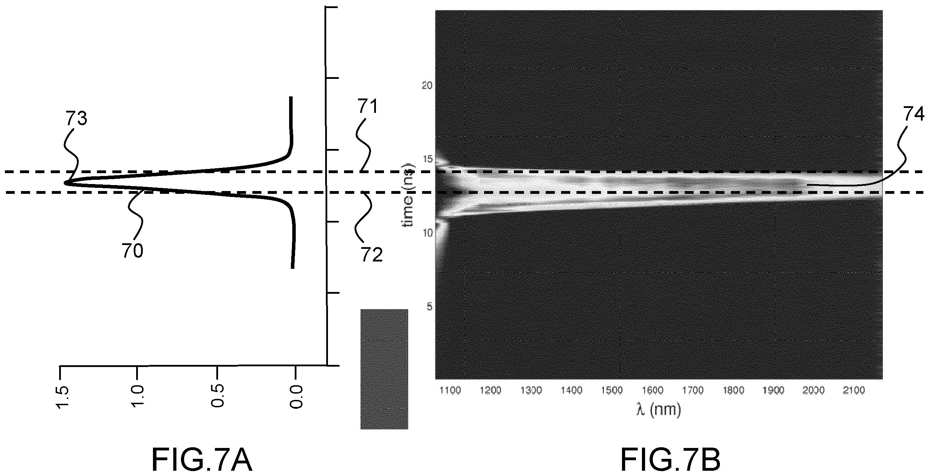

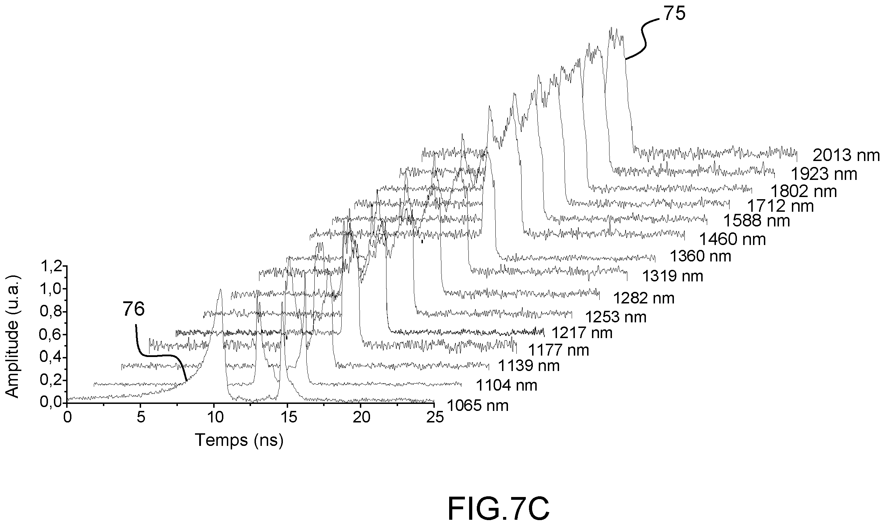

Les figures 7A à 7C illustrent au moyen de courbes expérimentales l'élargissement temporel généré par les conversions non linéaires, mis en évidence par la déposante dans la fibre microstructurée (ou fibre à cristal photonique) représentée sur la figure 5A. La figure 7A représente l'enveloppe temporelle 70 de l'impulsion I₂ (en ns pour l'abscisse et en unités arbitraires pour l'ordonnée) dans un exemple de mise en oeuvre. L'enveloppe est de forme sensiblement gaussienne, la durée d'impulsion étant définie par l'écartement entre les lignes en pointillés 71, 72, parallèles à l'axe des ordonnées et qui interceptent l'enveloppe de l'impulsion 70 à mi-hauteur de son pic 73. La figure 7B représente (en niveau de gris) l'énergie mesurée en fonction du temps pour chaque longueur d'onde. Les zones plus foncées correspondent dans cette figure aux zones d'énergie maximale. Cette courbe met en évidence qu'aux pieds de l'impulsion (figure 7A), la puissance étant plus faible, les longueurs d'onde générées dans le supercontinuum sont plus proches de la longueur d'excitation (ici 1,064 µm). Au contraire, vers le pic de l'impulsion (référencé 73 sur la figure 7A), la puissance est maximale et la longueur d'onde générée est plus éloignée de la longueur d'onde de pompe. On observe ainsi sur la figure 7B une répartition de l'énergie pour les différentes longueurs d'onde en fonction du temps qui présente une forme 74 reproduisant sensiblement la forme de l'impulsion d'excitation. La figure 7C illustre ce phénomène par une représentation en 3D montrant pour différentes longueurs d'onde émises dans le supercontinuum, la répartition de l'énergie en fonction du temps. Ainsi par exemple, à 2013 nm (courbe 75), c'est-à-dire à une longueur d'onde éloignée de la longueur d'onde d'excitation, la courbe donnant la puissance lumineuse (ici en unités arbitraires) en fonction du temps présente une forme sensiblement similaire à celle de l'impulsion d'excitation (figure 7A). Au contraire, aux longueurs d'onde proches de la longueur d'onde d'excitation (par exemple courbe 76 à 1065 nm), la répartition de l'énergie se fait selon deux pics principaux centrés à des temps correspondant aux pieds de l'impulsion d'excitation. Il résulte de cet effet, qu'il ne sera pas possible de faire coïncider temporellement dans l'échantillon le faisceau pompe dont la durée d'impulsion est de l'ordre de la nanoseconde, avec l'ensemble des impulsions aux différentes longueurs d'onde du faisceau sonde constitué par le supercontinuum. Ce phénomène, mis en évidence par la déposante, résulte donc en un élargissement non linéaire du faisceau sonde dû au mécanisme de génération du supercontinuum dans la fibre non linéaire.

Un effet du dispositif de contrôle du profil temporel de l'impulsion 405 (figure 4) est ainsi de réduire la durée d'impulsion du faisceau d'excitation afin de regrouper l'ensemble des impulsions de différentes longueurs d'onde du supercontinuum dans une enveloppe temporelle de largeur sensiblement similaire à celle du faisceau pompe, la largeur étant définie par la largeur à mi-hauteur de l'enveloppe temporelle. On cherche ainsi à obtenir une impulsion I₄ multilongueur d'onde dont toutes les composantes puissent être temporellement superposées avec l'impulsion source monochromatique.

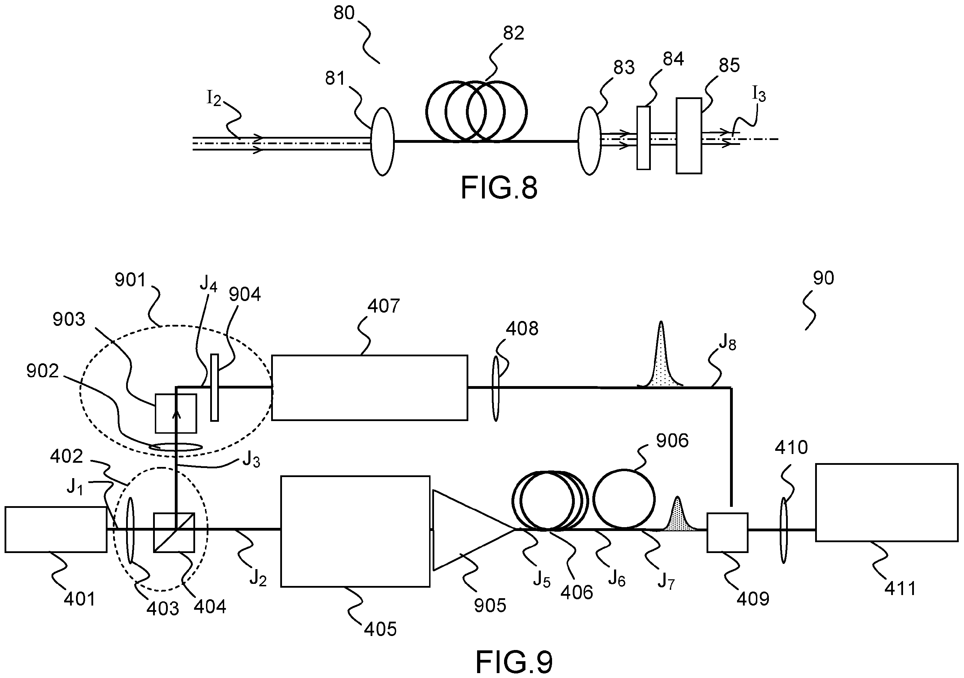

La figure 8 présente un exemple de réalisation d'un dispositif 80 de réduction de la durée d'impulsion. Il comprend généralement un matériau biréfringent, une fibre ou un morceau de verre par exemple et un polariseur fibré ou non. Dans l'exemple représenté sur la figure 8, le dispositif 80 comprend principalement une fibre optique biréfringente 82 présentant deux axes de biréfringence et un polariseur 85 positionné en sortie de la fibre. Une lentille 81 permet d'injecter le faisceau laser incident I₂ (polarisé) dans la fibre optique 82 et une lentille 83 de collimation est utilisée en sortie de la fibre 82 pour former un faisceau faiblement divergent en entrée du polariseur 85. Le faisceau laser I₂ subit des effets de non linéarité optique dus à l'intensité du faisceau et à la biréfringence de la fibre. Ces effets sont par exemple des effets d'automodulation de phase dus à l'effet Kerr. En particulier, l'effet Kerr induit une rotation non linéaire de la polarisation du faisceau incident lorsque la direction de la polarisation à l'entrée de la fibre n'est pas colinéaire avec les axes de biréfringence. Ainsi, lorsque le polariseur 85 est agencé par rapport à la fibre 82 de telle sorte à sélectionner un signal de sortie, éventuellement au moyen d'une lame demi-onde 84 et d'un polariseur 85, seule la puissance ayant subi de façon majoritaire l'effet Kerr sera prélevée. Il en résulte une possibilité de sélectionner selon l'orientation du polariseur 85 et de la lame demi onde 84 lorsqu'une telle lame est prévue, une durée de l'impulsion de sortie I₃ plus ou moins importante, comprise entre la durée de l'impulsion d'entrée I₂ et une durée d'impulsion réduite d'un facteur donné, typiquement un facteur maximal de 16. L'ajustement de la durée de l'impulsion de sortie est réalisé grâce à l'orientation des axes de biréfringence de la fibre vis-à-vis de l'axe de polarisation du faisceau incident. Une lame demi-onde (non représentée sur la figure 8) peut alors être introduite en amont de la fibre pour assurer cette orientation de la direction de polarisation du faisceau incident avec les axes de biréfringence. Le faisceau laser incident I₂ est généralement polarisé en sortie du séparateur 402. Si ce n'est pas le cas, il est possible de prévoir en amont de la fibre un polariseur (non représenté sur la figure 8). Avec un dispositif du type de celui représenté sur la figure 8, il est donc possible d'ajuster la durée de l'impulsion avant que celle-ci soit envoyée dans la fibre non linéaire (406, figure 4) pour la génération du supercontinuum. La fibre biréfringente est par exemple une fibre de type Corning HI 980 ou Corning HI1060.

D'autres dispositifs de réduction de la durée de l'impulsion sont envisageables. Par exemple, il est possible d'utiliser des matériaux de type absorbants saturables, dont la propriété est d'absorber moins aux intensités lumineuses fortes. Une impulsion laser incidente qui traverse un tel matériau va donc voir une absorption des pieds de l'impulsion tandis que le pic de l'impulsion sera transmis, entraînant une diminution de la durée de l'impulsion.

Dans les deux exemples de dispositif mentionnés ci-dessous, la diminution de la largeur temporelle de l'impulsion s'accompagne d'une diminution de l'énergie de l'impulsion. Il est possible de prévoir en aval du dispositif de contrôle du profil temporel de l'impulsion (405, figure 4), un amplificateur optique, comme cela sera décrit par la suite.

Alternativement, il est également possible de prévoir un dispositif de contrôle du profil temporel de l'impulsion pour élargir la durée du faisceau pompe de telle sorte que là encore, les enveloppes temporelles des faisceaux sonde et pompe soient de largeurs comparables. Par exemple, un tel dispositif peut être constitué d'une fibre à forte dispersion contrôlée (exemple : Maury, J; Auguste, J L; Février, S; Blondy, J M; Dussardier, B; Monnom, G; "Conception and characterization of a dual-concentric-core erbium-doped dispersion-compensating fiber"; Optics Letters, Vol. 29 Issue 7, pp.700-702 (2004)) ; ou d'un module de compensation de dispersion de chez Teraxion (Module CS-TDCMX).

Dans tous les cas, on pourra calculer au moyen d'un logiciel adapté l'élargissement temporel attendu pour la fibre non linéaire choisi pour générer le supercontinuum et dimensionner le dispositif de contrôle du profil temporel de l'impulsion en fonction de cet élargissement. Par ailleurs, la ligne à retard optique 407 permet de compenser les chemins optiques sur les deux voies pour que les faisceaux sonde et pompe soient focalisés en même temps sur l'échantillon.

La figure 9 présente une variante du dispositif représenté sur la figure 4. Outre les éléments déjà décrits au regard de la figure 4, le dispositif tel que décrit sur la figure 9 comprend sur la voie d'excitation un amplificateur optique 905 permettant notamment comme cela a été évoqué précédemment de régénérer le signal après passage dans le dispositif de réduction de l'impulsion 405. L'amplificateur optique peut être un amplificateur massif ou à fibre. Il est dimensionné pour pouvoir amplifier suffisamment le signal d'entrée qui induira des élargissements spectraux dans la fibre non linéaire 406. Cet amplificateur possède avantageusement une diode de pompe dont il est possible de modifier la puissance. Une minimisation de l'effet Raman stimulé pourra être recherchée au sein de l'amplificateur. Deux isolateurs (non représentés sur la figure 9) pourront être prévus, l'un à l'entrée, l'autre à la sortie, pour le protéger des retours parasites. Ce système de régénération optique pourra être étudié de manière à apporter, en plus de l'effet d'amplification, une modification de la phase et de l'enveloppe de l'impulsion afin de faciliter l'extension du spectre lors de l'étape de conversion non linéaire.

Le dispositif comprend également en aval de la fibre non linéaire 406 une fibre optique 906 à dispersion chromatique déterminée et de longueur ajustée pour compenser la différence de temps de groupe entre les composantes spectrales du supercontinuum qui peut résulter d'une longueur de fibre non linéaire 406 importante. Le but étant de resynchroniser parfaitement toutes les longueurs d'ondes constituant le continuum de lumière. Ainsi dans cet exemple, une impulsion J₁ émise par la source primaire 401 est divisée en une impulsion J₂ sur la voie d'excitation et une impulsion J₃ sur la voie de pompe par le séparateur 402. Sur la voie d'excitation, le réducteur d'impulsion 405 permet de réduire la durée de l'impulsion d'excitation J₂ qui est amplifiée avant d'être envoyée dans la fibre non linéaire 406 pour former le supercontinuum J₆. La fibre 906 permet de compenser la différence de vitesse des ondes dans la fibre non linéaire 406 ce qui reconstitue temporellement une impulsion sonde polychromatique J₇ qui est envoyée dans l'analyseur 411.

Sur la voie pompe, le dispositif représenté sur la figure 9 comprend outre les éléments déjà décrits, un système 901 de génération de fréquences, par exemple un système de doublage de fréquence réalisé avec un cristal doubleur 903 de type LBO, KTP, PPKTP, BBO, PPLN, etc. Une lame demi-onde 902 peut être placée devant le cristal doubleur pour contrôler l'effet de conversion. Il est également possible de prévoir en aval du cristal non linéaire un sélecteur spectral 904 pour sélectionner la longueur d'onde de pompe en fonction des applications. Ainsi selon un exemple, l'impulsion J₃ envoyée par le séparateur d'impulsions 402 vers la voie pompe peut être doublée au moyen du dispositif 901 de conversion de longueur d'onde pour former une impulsion J₄ par exemple à 532 nm quand la source primaire 401 émet à 1,06 µm. Grâce au sélecteur spectral 904, il est possible de choisir la longueur d'onde de la ou des faisceaux de pompe J₈ qui seront ensuite envoyés dans l'analyseur 411.

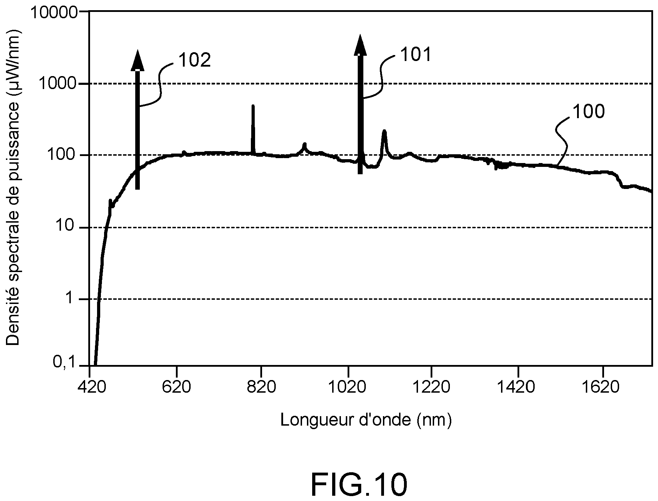

La figure 10 illustre ainsi une application selon laquelle deux faisceaux de pompe à 532 nm et 1,06 µm sont utilisés (respectivement référencés 101 et 102 sur la figure 10). Dans cet exemple, la fibre non linéaire est structurée pour générer un supercontinuum s'étalant dans un spectre large en amont et en aval de la longueur d'excitation à 1,06 µm. L'utilisation de deux faisceaux pompe dans le visible et dans l'infrarouge, par exemple en spectroscopie CARS, peut permettre d'analyser plus ou moins en profondeur l'échantillon. L'impulsion pompe à 1,06 µm permet en effet une analyse plus en profondeur des tissus tandis que l'impulsion pompe dans le visible, absorbée par l'échantillon, permettra une analyse en surface. Le réducteur d'impulsion sur la voie d'excitation permettra d'ajuster les durées d'impulsions des faisceaux sonde et pompe et d'assurer une meilleure efficacité du processus non linéaire. L'utilisation de cette double excitation à 532 nm et à 1064 nm pourra être accompagnée par un filtrage spectral du faisceau J₇ pour permettre l'analyse simultanée des radiations CARS obtenues par les deux faisceaux de pompe. Ce filtrage consistera à prélever dans l'infrarouge, les longueurs d'onde entre 1.06µm et 2.2µm et dans le visible, les longueurs d'onde entre 532 nm et 700 nm. Ce filtrage sera réalisé avec des filtres diélectriques passe bande.

Les applications du dispositif d'émission laser décrit dans la présente demande sont multiples et concernent notamment toutes les applications de spectroscopie ou microspectroscopie basées sur des mécanismes d'optique non linéaire. Notamment, le dispositif selon l'invention peut s'appliquer à l'imagerie cellulaire avec l'enregistrement de plusieurs images incluant une résolution spatiale et temporelle, le dépistage d'éléments chimiques appliqué au diagnostic hématologique etc.

Bien que décrite à travers un certain nombre d'exemples de réalisation détaillés, le procédé et le dispositif d'émission laser selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Dispositif d'émission laser pour l'analyse spectroscopique d'un échantillon comprenant :
- une source laser primaire (401) d'émission d'un faisceau pompe (I₅, J₃) et d'un faisceau d'excitation (I₂, J₂), les deux faisceaux étant impulsionnels, de durée d'impulsion nanoseconde ou subnanoseconde;
- une fibre optique non linéaire (406) dans laquelle est injecté ledit faisceau d'excitation pour former un faisceau sonde (I₄, J₇) à large bande spectrale ;
- des moyens de superposition spatiale (409) desdits faisceaux pompe et sonde en vue de l'analyse spectroscopique de l'échantillon ;
**caractérisé en ce que** ledit dispositif d'émission laser comprend en outre :
- un dispositif (405) de contrôle du profil temporel adapté au contrôle de la durée d'impulsion d'un desdits faisceaux pompe ou d'excitation, permettant de compenser l'élargissement temporel non linéaire du faisceau sonde généré par la fibre optique non linéaire afin d'obtenir des faisceaux pompe et sonde dont les enveloppes temporelles présentent des durées d'impulsions sensiblement égales.

2. Dispositif d'émission laser selon la revendication 1, dans lequel le dispositif de contrôle du profil temporel permet la diminution de la durée d'impulsion du faisceau d'excitation.

3. Dispositif d'émission laser selon la revendication 2, dans lequel le dispositif de contrôle du profil temporel comprend un matériau biréfringent (82) et un polariseur (85), le faisceau d'excitation (I₂) étant polarisé en entrée du dispositif de contrôle du profil temporel selon une direction distincte des axes de biréfringence dudit matériau biréfringent.

4. Dispositif d'émission laser selon la revendication 3, dans lequel le dispositif de contrôle du profil temporel comprend une fibre biréfringente (82).

5. Dispositif d'émission laser selon la revendication 2, dans lequel le dispositif de contrôle du profil temporel comprend un matériau à absorption saturable.

6. Dispositif d'émission laser selon la revendication 1, dans lequel le dispositif de contrôle du profil temporel permet l'élargissement de la durée d'impulsion du faisceau pompe.

7. Dispositif d'émission laser selon la revendication 6, dans lequel le dispositif de contrôle du profil temporel comprend une fibre optique dispersive.

8. Dispositif d'émission laser selon l'une quelconque des revendications précédentes, dans lequel la source laser primaire comprend une source d'émission laser (401) nanoseconde ou subnanoseconde et un dispositif (402) de séparation de l'onde émise en deux faisceaux de puissances contrôlées pour former lesdits faisceau pompe et faisceau d'excitation.

9. Dispositif d'émission laser selon la revendication 8, dans lequel la source laser primaire est un micro laser.

10. Dispositif d'émission laser selon l'une quelconque des revendications précédentes, comprenant en outre un amplificateur optique (905) en amont de ladite fibre optique non linéaire.

11. Dispositif d'émission laser selon l'une quelconque des revendications précédentes, comprenant en outre une ligne à retard optique (407) pour ajuster les chemins optiques des faisceaux pompe et sonde.

12. Dispositif d'émission laser selon l'une quelconque des revendications précédentes, comprenant en outre un dispositif optique non linéaire de générations d'harmoniques (901) dans lequel est injecté le faisceau pompe pour générer au moins un second faisceau pompe à une longueur d'onde différente de celle du premier faisceau pompe.

13. Système d'analyse spectroscopique (40, 90) d'un échantillon comprenant :
- un dispositif d'émission laser selon l'une quelconque des revendications précédentes ;
- un analyseur spectral et/ou temporel (411) de l'onde résultant de l'interaction non linéaire dans l'échantillon des faisceaux pompe et sonde émis par ledit dispositif d'émission laser.

14. Méthode d'émission laser pour l'analyse spectroscopique d'un échantillon comprenant :
- l'émission d'un faisceau pompe et d'un faisceau d'excitation, les deux faisceaux étant impulsionnels, de durée d'impulsion nanoseconde ou subnanoseconde;
- l'injection dans une fibre optique non linéaire dudit faisceau d'excitation pour former un faisceau sonde à large bande spectrale ;
- le contrôle de la durée d'impulsion d'un desdits faisceaux pompe ou d'excitation permettant de compenser l'élargissement temporel non linéaire du faisceau sonde généré par la fibre optique non linéaire afin d'obtenir des faisceaux pompe et sonde dont les enveloppes temporelles présentent des durées sensiblement égales;
- la superposition spatiale desdits faisceaux pompe et sonde en vue de l'analyse spectroscopique de l'échantillon.

15. Méthode d'émission laser selon la revendication 14, dans laquelle le contrôle de la durée d'impulsion d'un desdits faisceaux pompe ou d'excitation comprend la réduction de la largeur temporelle du faisceau d'excitation.

16. Méthode d'émission laser selon la revendication 14, dans laquelle le contrôle de la durée d'impulsion d'un desdits faisceaux pompe ou d'excitation comprend l'élargissement de la largeur temporelle du faisceau de pompe.

17. Méthode d'émission laser selon l'une des revendications 15 à 17 comprenant en outre l'amplification du faisceau d'excitation avant son injection dans ladite fibre non linéaire.

## Patentansprüche

1. Laseremissionsvorrichtung zur spektroskopischen Analyse einer Probe mit:
- einer primären Laserquelle (401) zur Emission eines Pumpstrahls (I₅, J₃) und eines Anregungsstrahls (I₂, J₂), wobei beide Strahlen Impulsstrahlen mit einer Nanosekunden- oder Subnanosekunden-Impulsdauer sind,
- einem nichtlinearen Lichtwellenleiter (406), in den der Anregungsstrahl gespeist wird, um einen spektral breitbandigen Untersuchungsstrahl (I₄, J₇) zu bilden,
- Mittel (409) für die räumliche Überlagerung der Pump- und Untersuchungsstrahlen für die spektroskopische Analyse der Probe,
**dadurch gekennzeichnet, dass** die Laseremissionsvorrichtung ferner umfasst:
- eine Vorrichtung (405) für die Steuerung des Zeitprofils, welche für die Steuerung der Impulsdauer eines der Pump- oder Anregungsstrahlen geeignet ist, wodurch die nichtlineare zeitliche Ausweitung des von dem nichtlinearen Lichtwellenleiter erzeugten Untersuchungsstrahls ausgeglichen werden kann, um Pump- und Untersuchungsstrahlen zu erhalten, deren Zeithüllen im Wesentlichen gleiche Impulsdauern aufweisen.

2. Laseremissionsvorrichtung nach Anspruch 1, bei der die Vorrichtung für die Steuerung des Zeitprofils die Verringerung der Impulsdauer des Anregungsstrahls ermöglicht.

3. Laseremissionsvorrichtung nach Anspruch 2, bei der die Vorrichtung für die Steuerung des Zeitprofils ein doppelbrechendes Material (82) und einen Polarisator (85) umfasst, wobei der Anregungsstrahl (I₂) beim Eintreffen in die Vorrichtung für die Steuerung des Zeitprofils in einer Richtung polarisiert wird, die sich von der Richtung der Doppelbrechungsachsen des doppelbrechenden Materials unterscheidet.

4. Laseremissionsvorrichtung nach Anspruch 3, bei der die Vorrichtung für die Steuerung des Zeitprofils eine doppelbrechende Faser (82) aufweist.

5. Laseremissionsvorrichtung nach Anspruch 2, bei der die Vorrichtung für die Steuerung des Zeitprofils ein sättigbar absorbierendes Material aufweist.

6. Laseremissionsvorrichtung nach Anspruch 1, bei der die Vorrichtung für die Steuerung des Zeitprofils das Ausweiten der Impulsdauer des Pumpstrahls ermöglicht.

7. Laseremissionsvorrichtung nach Anspruch 6, bei der die Vorrichtung für die Steuerung des Zeitprofils einen dispersiven Lichtwellenleiter aufweist.

8. Laseremissionsvorrichtung nach einem beliebigen der vorhergehenden Ansprüche, bei der die primäre Laserquelle eine Nanosekunden- oder Subnanosekundenlaseremissionsquelle (401) und eine Vorrichtung (402) zur Trennung der emittierten Welle in zwei Strahlen mit kontrollierter Leistung aufweist, um Pumpstrahl und Anregungsstrahl zu bilden.

9. Laseremissionsvorrichtung nach Anspruch 8, bei der die primäre Laserquelle ein Mikrolaser ist.

10. Laseremissionsvorrichtung nach einem beliebigen der vorhergehenden Ansprüche, umfassend ferner einen optischen Verstärker (905) vor dem nichtlinearen Lichtwellenleiter.

11. Laseremissionsvorrichtung nach einem beliebigen der vorhergehenden Ansprüche, umfassend ferner eine optische Verzögerungsleitung (407) zur Einstellung des Strahlenganges der Pump- und Untersuchungsstrahlen.

12. Laseremissionsvorrichtung nach einem beliebigen der vorhergehenden Ansprüche, umfassend ferner eine nichtlineare optische Vorrichtung zur Erzeugung von Oberschwingungen (901), in die der Pumpstrahl gespeist wird, um mindestens einen zweiten Pumpstrahl mit einer Wellenlänge zu erzeugen, die sich von derjenigen des ersten Pumpstrahls unterscheidet.

13. Anordnung (40, 90) für die spektroskopische Analyse einer Probe, umfassend:
- eine Laseremissionsvorrichtung nach einem beliebigen der vorhergehenden Ansprüche;
- einen Spektral- und/oder Zeitablaufanalysator (411) der Welle, die sich aus der nichtlinearen Interaktion der von der Laseremissionsvorrichtung emittierten Pump- und Untersuchungsstrahlen in der Probe ergibt.

14. Laseremissionsverfahren für die spektroskopische Analyse einer Probe, umfassend:
- die Emission eines Pumpstrahls und eines Anregungsstrahls, wobei die beiden Strahlen Impulsstrahlen wobei beide Strahlen Impulsstrahlen mit einer Nanosekunden- oder Subnanosekunden-Impulsdauer sind,
- die Speisung des Anregungsstrahls in einen nichtlinearen Lichtwellenleiter, um einen spektral breitbandigen Untersuchungsstrahl zu bilden,
- die Steuerung der Impulsdauer eines der Pump- oder Anregungsstrahlen, wodurch die nichtlineare zeitliche Ausweitung des von dem nichtlinearen Lichtwellenleiter erzeugten Untersuchungsstrahls ausgeglichen werden kann, um Pump- und Untersuchungsstrahlen zu erhalten, deren Zeithüllen im Wesentlichen gleiche Dauern aufweisen,
- die räumliche Überlagerung der Pump- und Untersuchungsstrahlen in Hinblick auf die spektroskopische Analyse der Probe.

15. Laseremissionsverfahren nach Anspruch 14, bei dem die Steuerung der Impulsdauer eines der Pump- oder Anregungsstrahlen die Verringerung der zeitlichen Breite des Anregungsstrahls umfasst.

16. Laseremissionsverfahren nach Anspruch 14, bei dem die Steuerung der Impulsdauer eines der Pump- oder Anregungsstrahlen die Ausweitung der zeitlichen Breite des Pumpstrahls umfasst.

17. Laseremissionsverfahren nach einem der Ansprüche 15 bis 17, umfassend ferner die Verstärkung des Anregungsstrahls vor Speisung in den nichtlinearen Lichtwellenleiter.

## Claims

1. A laser emission device for the spectroscopic analysis of a sample, comprising:
- a primary laser emission source (401) of a pump beam (I₅, J₃) and of an excitation beam (I₂, J₂), the two beams being pulsed, with nanosecond or subnanosecond pulse duration;
- a nonlinear optical fiber (406) into which said excitation beam is injected to form a probe beam (I₄, J₇) with a broad spectral band;
- means of spatial overlapping (409) of said pump and probe beams in view of the spectroscopic analysis of the sample;
**characterized in that** the laser emission device further comprises:
- a control device (405) for the time profile of the pulse duration of one of said pump or excitation beams, making it possible to compensate the nonlinear time broadening of the probe beam generated by the nonlinear optical fiber in order to obtain pump and probe beams with time envelopes having substantially equal pulse durations.

2. The laser emission device according to claim 1, wherein the control device for the time profile makes it possible to reduce the pulse duration of the excitation beam.

3. The laser emission device according to claim 2, wherein the control device for the time profile comprises a birefringent material (82) and a polarizer (85), the excitation beam (I₂) being polarized at the input of the control device for the time profile along a direction which is distinct from the birefringence axes of said birefringent material.

4. The laser emission device according to claim 3, wherein the control device for the time profile comprises a birefringent fiber (82).

5. The laser emission device according to claim 2, wherein the control device for the time profile comprises a saturable absorber material.

6. The laser emission device according to claim 1, wherein the control device for the time profile makes it possible to broaden the pulse duration of the pump beam.

7. The laser emission device according to claim 6, wherein the control device for the time profile comprises a dispersive optical fiber.

8. The laser emission device according to anyone of the preceding claims, wherein the primary laser source comprises a nanosecond or subnanosecond laser emission source (401) and a device (402) for splitting the emitted wave into two beams of controlled powers, to form said pump beam and said excitation beam.

9. The laser emission device according to claim 8, wherein the primary laser source is a microlaser.

10. The laser emission device according to anyone of the preceding claims, further comprising an optical amplifier (905), upstream from said nonlinear optical fiber.

11. The laser emission device according to anyone of the preceding claims, further comprising an optical delay line (407) for adjusting the optical paths of the pump and probe beams.

12. The laser emission device according to anyone of the preceding claims, further comprising a nonlinear optical device for generating harmonics (901), into which the pump beam is injected, to generate at least a second pump beam at a different wavelength from that of the first pump beam.

13. A system (40, 90) for the spectroscopic analysis of a sample, comprising:
- a laser emission device according to anyone of the preceding claims;
- a spectral and/or time analyzer (411) of the wave resulting from the nonlinear interaction inside the sample of the pump and probe beams emitted by said laser emission device.

14. A laser emission method for the spectroscopic analysis of a sample, comprising:
- the emission of a pump beam and of an excitation beam, the two beams being pulsed, with nanosecond or subnanosecond pulse duration;
- the injection of said excitation beam into a nonlinear optical fiber, to form a probe beam with a broad spectral band;
- the control of the time profile of one of said pump or excitation beams, making it possible to compensate the nonlinear time broadening of the probe beam generated by the nonlinear optical fiber in order to obtain pump and probe beams with time envelopes having substantially equal durations;
- the spatial overlapping of said pump and probe beams in view of the spectroscopic analysis of the sample.

15. The laser emission method according to claim 14, wherein the control of the time profile of one of said pump or excitation beams comprises the reduction of the time width of the excitation beam.

16. The laser emission method according to claim 14, wherein the control of the time profile of one of said pump or excitation beams comprises the broadening of the time width of the pump beam.

17. The laser emission method according to one of claims 15 to 17 further comprising the amplification of the excitation beam before the injection thereof into said nonlinear fiber.
